# EUROPEAN PATENT SPECIFICATION

(11) **EP 2 683 971 B1**
(45) Date of publication and mention of the grant of the patent: **17.06.2015**
(21) Application number: 12713328.8
(22) Date of filing: 07.03.2012
(51) Int. Cl.: F16K 15/02, H01M 8/04, H01M 8/10, G05D 16/10

(54) **A SELF REGULATING AIR THROTTLE VALVE, METHOD OF REGULATING AIR, AND METHOD OF ASSEMBLING THEREOF**
SELBSTREGELNDES LUFTDROSSELVENTIL, VERFAHREN ZUR LUFTREGELUNG UND VERFAHREN ZU SEINER MONTAGE
PAPILLON À AIR À RÉGULATION AUTOMATIQUE, PROCÉDÉ DE RÉGULATION D'AIR, ET PROCÉDÉ D'ASSEMBLAGE S'Y RAPPORTANT

(30) Priority: 09.03.2011 IN MM06572011
(43) Date of publication of application: 15.01.2014
(73) Proprietor: Tata Motors Limited, 400 001 Mumbai, Maharashtra (IN)
(72) Inventor: MUNUSAMY, Raja, Mumbai, Maharashtra 400 001 (IN); ANNEGOWDA, Yogesha, Sankenhalli, Mumbai, Maharashtra 400 001 (IN); MATH, Somalingayya, Gurupadayya, Mumbai, Maharashtra 400 001 (IN); DHIRAJLAL, Bhut, Bhaveshkumar, Mumbai, Maharashtra 400 001 (IN)
(74) Representative: Hirsch & Associés
(86) International application number: PCT/IB2012/051055
(87) International publication number: WO 2012/120453

(56) References cited:
- DE-A1- 19 616 646
- DE-A1-102009 012 946
- GB-A- 565 291
- US-A- 4 911 196

## Description

### TECHINCAL FIELD

Embodiments of the present disclosure relate to air throttle valve, more particularly relates to self regulating air throttle valve used in fuel cell.

### BACKGROUND OF THE DISCLOSURE AND PRIOR ARTS

Polymer electrolyte fuel cell stack is used for generation of power on-board. Hydrogen is used as fuel and air is used as oxidant. Hydrogen and air is humidified prior to feeding into fuel cell stack. Both hydrogen and air pressurized and pressure balanced for optimum performance of stack. There is a requirement of valve for throttling and regulation of air at the out of stack. Air throttle valve may be of motorized or pneumatic type. An airflow regulation system and method for fuel cell stack includes a compressor that supplies air. Fuel cell air subsystems outlet is connected to the air throttle valve. This throttling is required to maintain the humidity of air for maintaining the high proton conductivity for optimum performance of fuel cell stack.

### STATEMENT OF THE DISCLOSURE

Accordingly, the present disclosure provides for a self regulating air throttle valve (1), comprising a male plunger (2) and a female plunger (3) of predetermined shapes; a helical spring (7) supporting the male plunger (2) at one end of the spring (7) and other end of the spring is fixed to a flange (14); a plunger guide (4) passing through the helical spring (7) and attached to the flange (14) at one end using fasteners (15) and other end is passed through the male plunger (2); a manifold (5) comprising one or more breathing ports (6) on its surface, said manifold (5) is configured to house said male (2) and said female plungers (3); and an outer cover (8), housing the manifold (5), wherein said outer cover (8) is attached with an inlet manifold (9) at top of the outer cover (8) and an outlet manifold (10) at bottom of the outer cover (8), wherein said male plunger (2) is regulated by force of compressed air supplied through the inlet manifold (9) and reverse force of the helical spring (7) to vary rate of opening of the breathing ports (6) to regulate the air throttle valve, also provides for a method of regulating air using a self regulating air throttle valve (1), said method comprising act of exerting pressure of air onto a male plunger (2) through inlet manifold (10) using a compressor, wherein reverse force generated by helical spring regulates movement of male plunger (2) for varying opening of breathing ports (6) for regulating air through the valve (1), and also provides for a method of assembling a self regulating air throttle valve (1), said method comprising acts of supporting a helical spring (7) to male plunger (2) at one end of the helical spring (7) and fixing other end of the spring to a flange (14); passing a plunger guide (4) through the helical spring (7) and attaching to the flange (14) at one end using fasteners (15) and passing other end of the plunger guide through the male plunger (2); connecting a female plunger to a flange (12); mounting a manifold (5) to house said male (2) and said female plungers (3) using fasteners (16); attaching an outer cover (8) to the manifold (5) through the flange (12) to house the manifold (5); and fixing an inlet manifold (9) at top of the outer cover (8) and an outlet manifold (10) at bottom of the outer cover (8) through flanges (12, 13).

### OBJECTS OF THE DISCLOSURE

The object is to provide a self regulating air throttle valve.

Another object is to provide a method of regulating air using self regulating air throttle valve.

### BRIEF DESCRIPTION OF THE ACCOMPANYING DRAWINGS

The novel features and characteristic of the disclosure are set forth in the appended claims. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
FIGS. 1 and 2 shows a self regulating air throttle valve according to present disclosure; and
FIG. 3 shows graph of Force Vs Deflection for the spring according to the present disclosure.

The figures depict embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

In the following detailed description, reference is made to the accompanying figures, which form a part hereof. In the figures, similar symbols typically identify similar components, unless context dictates otherwise. The illustrative embodiments described in the detailed description, and figures are not meant to be limiting. Other embodiments may be utilized, and other changes may be made, without departing from the scope of the subject matter presented herein. It will be readily understood that the aspects of the present disclosure, as generally described herein, and illustrated in the figures, can be arranged, substituted, combined, and designed in a wide variety of different configurations, all of which are explicitly contemplated and make part of this disclosure.

This disclosure is drawn, *inter*-*alia*, to a self regulating air regulating valve, a method of regulating air and a method of assembling.

In one embodiment, a self regulating air throttle valve (1), comprising a male plunger (2) and a female plunger (3) of predetermined shapes; a helical spring (7) supporting the male plunger (2) at one end of the spring (7) and other end of the spring is fixed to a flange (14); a plunger guide (4) passing through the helical spring (7) and attached to the flange (14) at one end using fasteners (15) and other end is passed through the male plunger (2); a manifold (5) comprising one or more breathing ports (6) on its surface, said manifold (5) is configured to house said male (2) and said female plungers (3); and an outer cover (8), housing the manifold (5), wherein said outer cover (8) is attached with an inlet manifold (9) at top of the outer cover (8) and an outlet manifold (10) at bottom of the outer cover (8); wherein said male plunger (2) is regulated by force of compressed air supplied through the inlet manifold (9) and reverse force of the helical spring (7) to vary rate of opening of the breathing ports (6) to regulate the air throttle valve.

In one embodiment said male (2) and female (3) plungers are made of corrosion resistant material selected from a group comprising Teflon, Stainless Steel, Titanium, poly Vinyl dine fluoride, and Aluminum Alloys.

In one embodiment the inlet manifold, the female plunger, the male plunger and the outlet manifold are axially aligned with each other.

In one embodiment shape of the male plunger (2) is conical, wherein shape of said female plunger (3) matches with the shape of the male plunger (2).

In one embodiment, the manifold (5) comprises one or more vent ports (11) on its surface to prevent chocking of air inside the manifold (5).

In one embodiment said outer cover (8) is a cylindrical structure, wherein the inlet manifold (9) and the outlet manifold (10) are attached to the outer cover (8) through flanges (12, 13).

In one embodiment, a method of regulating air using a self regulating air throttle valve (1), said method comprising act of exerting pressure of air onto a male plunger (2) through inlet manifold (10) using a compressor, wherein reverse force generated by helical spring regulates movement of male plunger (2) for varying opening of breathing ports (6) for regulating air through the valve (1).

In one embodiment, a method of assembling a self regulating air throttle valve (1), said method comprising acts of supporting a helical spring (7) to male plunger (2) at one end of the helical spring (7) and fixing other end of the spring to a flange (14); passing a plunger guide (4) through the helical spring (7) and attaching to the flange (14) at one end using fasteners (15) and passing other end of the plunger guide through the male plunger (2); connecting a female plunger to a flange (12); mounting a manifold (5) to house said male (2) and said female plungers (3) using fasteners (16); attaching an outer cover (8) to the manifold (5) through the flange (12) to house the manifold (5); and fixing an inlet manifold (9) at top of the outer cover (8) and an outlet manifold (10) at bottom of the outer cover (8) through flanges (12, 13).

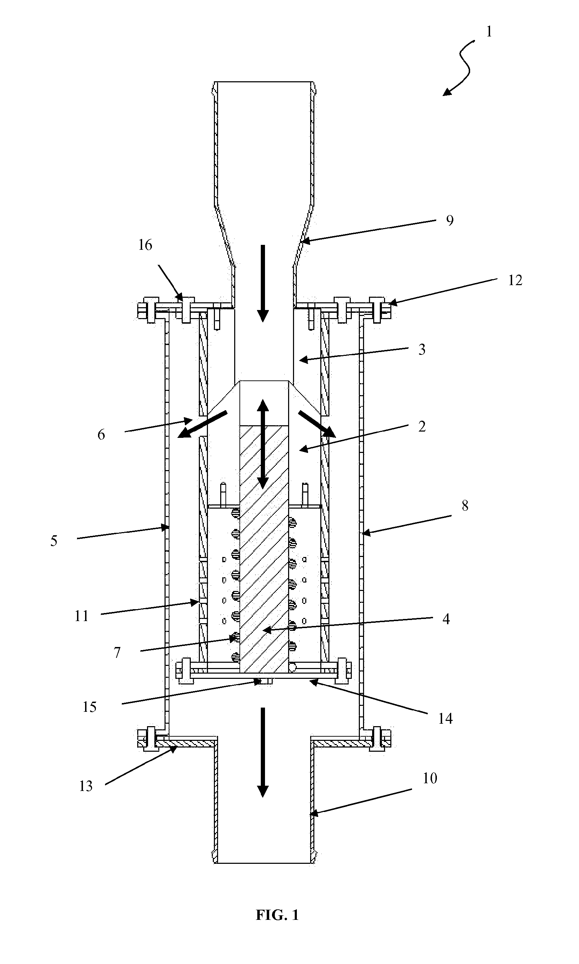

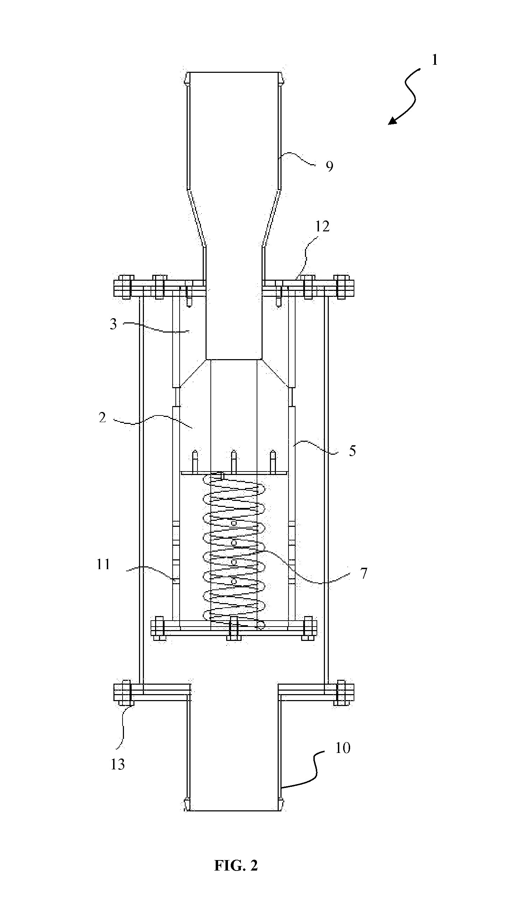

FIGS. 1 and 2 illustrate a self regulating air throttle valve according to the disclosure. The valve comprises an inlet manifold attached at its top for receiving compressed air from a compressor. The said inlet manifold is of tubular shape and is gradually converging for channelizing the inlet air. The inlet manifold is attached to the outer cover through a flange using fasteners. One end of the inlet manifold is connected to the compressor for receiving the pressurized air and other is connected to female plunger which is fixed at top of the outer cover. Inner diameter of the inlet manifold and inner diameter of the female plunger are same to maintain pressure of the air entering through the female plunger. The female plunger is fixed to the flange and mounted inside the manifold. The manifold is aligned axially with the outer cover and fixed to it through a flange using fasteners like screws. The manifold further comprises a plunger guide axially fixed at bottom of the manifold using another flange. A helical spring is mounted around the plunger guide and is attached to the flange at one end and its free end is fixed to a male plunger at its top. The male plunger is mounted inside the manifold such that the helical spring is supporting the male plunger and is guided by the plunger guide longitudinally or axially. Both the male plunger and the female plunger are made of alloy material such as Teflon, Stainless Steel, Titanium, poly Vinyl dine fluoride, Aluminum Alloys which is resistant to corrosion, withstand a temperature ranging from about 40°C to about 100°C and 100% saturated air. The female plunger has an inward conical end which matches and receives protruded conical end of the male plunger. The manifold comprises four breathing ports about its surface at the junction where the female plunger and the male plunger ends meets. The opening of the breathing ports is used for regulating air which is being regulated due to movement of the male plunger axially along the plunger guide. The air enters through the inlet manifold, passes through the female plunger and the opening of the breathing ports and enters to the space in the outer cover to come out of the valve through the outlet manifold. The outlet manifold is further connected to a fuel cell stack for oxidation for generating energy.

The manifold also has plurality of vent ports about its surface at the portion where the helical spring is mounted and below the male plunger during non operating condition. The non operating condition is one in which there is no gap between the male and female plunger. The vent ports help in escaping invaded air through it and prevent chocking of the air inside the manifold. The manifold is made of SS 316, SS304 material and is a cylindrical structure. The plunger guide, the outer cover, the inlet and outlet manifold are made of metallic material like SS 316, SS304.

The air throttle valve is designed based on the principle of balancing of forces due to pressure and opposing force by spring due to tension arising due to compression of steel spring. The throttle valve is self regulating type and does not require any controller for adjusting the venting rate. The spring is chosen such that it matches the force exerted by pressure of air and vent openings is adjusted by moving piston and vent is opened. The vent port is designed such that vent opening is adjusted by movement of piston required level of throttle is achieved and required back pressure is created for various operating conditions. Air compressor thrust increases RPM with increasing current demand; the thrust on the spring also increases (compression) which results in movement of male plunger and to increase in the venting area.

As highly water vapor saturated air is used and the temperature fluid is at about 75°C, the design of the valve has to withstand the operating conditions. The working pressure of the valve is between 1 bar to 3 bars, and maximum pressure for Teflon plunger at 65°C is 18 bars.

The humidity of fuel cell stack and thermal balance due to water condensation is maintained and water retention by polymer electrolyte is improved. Thereby high ionic conductivity is maintained at all operating conditions like Air mass flow rate, pressure, temperature and humidity.

### Working of the self regulated air throttle valve

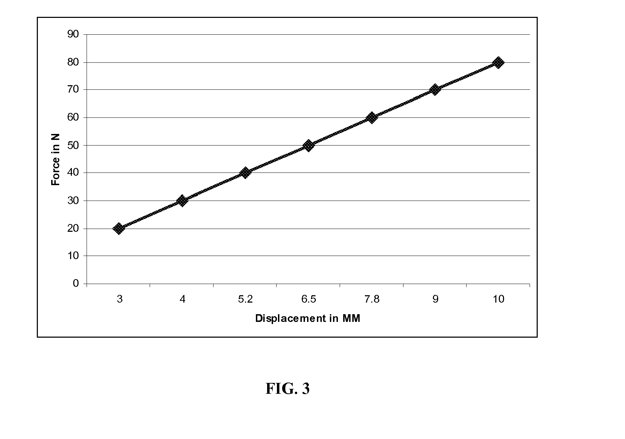

The Self Regulated Air Throttle Valve (SRATV) regulates the stack pressure by controlling the flow of air with saturated water vapor delivered by the stack. The air throttle valve comprises of variable nozzle, spring and housing of blocks. The SRATV works on the principle of balancing thrust exerted by pressure by air compressor and tension on the spring which counters the force exerted by air compressor. Two Teflon rods are aligned in line in the flow direction and are configured as male and female plungers. The Teflon male plunger is conical shaped and Teflon female plunger is machined such that Teflon male plunger mates over without an air gap when air compressor is not operating. The Teflon male plunger is allowed to move freely and the movement is regulated by supporting steel spring. Tension on the steel spring and thrust exerted by air compressor counters each other and resulting in thrust force to decide the location of the Teflon male plunger's position. The gap between male and female plungers regulates the flow of air. As the air compressor thrust increases with RPM (increasing current demand), the thrust on the steel spring also increases which results in movement of Teflon male plunger and also increased in the venting area. The Air Throttle Valve is designed in such a way that for various air compressor RPM, the valve is opened and vented the air and maintain the pressure of stack to a required level. The opening is directly proportional to the thrust exerted by the air compressor. The pressure regulation is done automatically and there is no need of any Engine Control Unit (ECU) generated signal for pressure regulation. The area and steel spring with appropriate tension is chosen for construction. FIG. 3 illustrates graph of Force Vs Deflection for the spring according to the present disclosure, wherein the force is directly proportional to the displacement of the spring for the specific requirement. This further is dependent on the design of fuel cell stack.

### Advantages and applications

The air throttle valve doesn't require electric controller.

The air throttle valve is a pneumatic in nature and is self regulating.

The air throttle valve is simpler in construction, cost effective, compact, ease in assembling and manufacture.

The air throttle valve is applicable, wherever self regulation is required depending on the input pressure.

### Referral Numerals:

1: Self regulating air throttle valve,
2: Male plunger,
3: Female plunger,
4: Plunger guide,
5: Manifold,
6: Breathing ports,
7: Helical spring,
8: Outer cover,
9: Inlet manifold,
10: Outlet manifold,
11: Vent Ports,
12, 13, and 14: Flanges, and
15, 16: Fasteners

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A self regulating air throttle valve (1), comprising:
a. a male plunger (2) and a female plunger (3) of predetermined shapes;
b. a helical spring (7) supporting the male plunger (2) at one end of the spring (7) and other end of the spring is fixed to a flange (14);
c. a plunger guide (4) passing through the helical spring (7) and attached to the flange (14) at one end using fasteners (15) and other end is passed through the male plunger (2);
d. a manifold (5) comprising one or more breathing ports (6) on its surface, said manifold (5) is configured to house said male (2) and said female plungers (3); and
e. an outer cover (8), housing the manifold (5), wherein said outer cover (8) is attached with an inlet manifold (9) at top of the outer cover (8) and an outlet manifold (10) at bottom of the outer cover (8);
wherein said male plunger (2) is regulated by force of compressed air supplied through the inlet manifold (9) and reverse force of the helical spring (7) to vary rate of opening of the breathing ports (6) to regulate the air throttle valve.

2. The self regulating air throttle valve as claimed in claim 1, wherein said male (2) and female (3) plungers are made of corrosion resistant material selected from a group comprising Teflon, stainless steel, titanium, poly Vinyl dine fluoride, and aluminum alloys.

3. The self regulating air throttle valve as claimed in claim 1, wherein the inlet manifold, the female plunger, the male plunger and the outlet manifold are axially aligned with each other.

4. The self regulating air throttle valve as claimed in claim 1, wherein shape of the male plunger (2) is conical, wherein shape of said female plunger (3) matches with the shape of the male plunger (2).

5. The self regulating air throttle valve as claimed in claim 1, wherein the manifold (5) comprises one or more vent ports (11) on its surface to prevent chocking of air inside the manifold (5).

6. The self regulating air throttle valve as claimed in claim 1, wherein said outer cover (8) is a cylindrical structure, wherein the inlet manifold (9) and the outlet manifold (10) are attached to the outer cover (8) through flanges (12, 13).

7. A method of regulating air using a self regulating air throttle valve (1) as defined in claim 1, said method
comprising act of exerting pressure of air onto a male plunger (2) through inlet manifold (10) using a compressor, wherein reverse force generated by helical spring regulates movement of male plunger (2) for varying opening of breathing ports (6) for regulating air through the valve (1).

8. A method of assembling a self regulating air throttle valve (1) as defined in claim 1, said method
comprising acts of:
a. supporting a helical spring (7) to male plunger (2) at one end of the helical spring (7) and fixing other end of the spring to a flange (14);
b. passing a plunger guide (4) through the helical spring (7) and attaching to the flange (14) at one end using fasteners (15) and passing other end of the plunger guide through the male plunger (2);
c. connecting a female plunger to a flange (12);
d. mounting a manifold (5) to house said male (2) and said female plungers (3) using fasteners (16);
e. attaching an outer cover (8) to the manifold (5) through the flange (12) to house the manifold (5); and
f. fixing an inlet manifold (9) at top of the outer cover (8) and an outlet manifold (10) at bottom of the outer cover (8) through flanges (12, 13).

9. A fuel cell comprising a self regulating air throttle valve (1) as claimed in claim 1.

## Patentansprüche

1. Selbstregelndes Luftdrosselventil (1), umfassend:
a) einen männlichen Kolben (2) und einen weiblichen Kolben (3) mit vorgegebenen Formen;
b) eine Schraubenfeder (7), die den männlichen Kolben (2) an einem Ende der Feder (7) stützt, und wobei das andere Ende der Feder an einem Flansch (14) befestigt ist;
c) eine Kolbenführung (4), die die Schraubendfeder (7) durchläuft und an einem Ende unter Benutzung von Befestigungselementen (15) am Flansch (14) angebracht ist, wobei das andere Ende den männlichen Kolben (2) durchläuft;
d) einen Verteiler (5), der einen oder mehr Belüftungsdurchlässe (6) auf seiner Oberfläche umfasst, wobei der Verteiler (5) zum Einfassen des männlichen (2) und weiblichen (3) Kolbens konfiguriert ist; und
e) eine Außenabdeckung (8), die den Verteiler (5) einfasst, wobei die Außenabdeckung (8) mit einem Einlassverteiler (9) an der Oberseite der Außenabdeckung (8) und einem Auslassverteiler (10) an der Unterseite der Außenabdeckung (8) angebracht ist;
wobei der männliche Kolben (2) durch die Kraft von Druckluft, welche durch den Einlassverteiler (9) zugeführt ist, und Umkehrkraft der Schraubenfeder (7) zum Variieren der Öffnungsrate der Belüftungsdurchlässe (6) zum Regeln des Luftdrosselventils geregelt ist.

2. Selbstregelndes Luftdrosselventil nach Anspruch 1, wobei der männliche (2) und weibliche (3) Kolben aus korrosionsfestem Material hergestellt sind, das aus einer Gruppe ausgewählt ist, die Teflon, Edelstahl, Titan, Polyvinylidenfluorid und Aluminiumlegierungen umfasst.

3. Selbstregulierendes Luftdrosselventil nach Anspruch 1, wobei der Einlassverteiler, der weibliche Kolben, der männliche Kolben und der Auslassverteiler axial aneinander ausgerichtet sind.

4. Selbstregelndes Luftdrosselventil nach Anspruch 1, wobei die Form des männlichen Kolbens (2) konisch ist, wobei die Form des weiblichen Kolbens (3) mit der Form des männlichen Kolbens (2) zusammenpasst.

5. Selbstregelndes Luftdrosselventil nach Anspruch 1, wobei der Verteiler (5) einen oder mehr Durchlässe (11) auf seiner Oberfläche zum Verhindern des Drosselns von Luft innerhalb des Verteilers (5) umfasst.

6. Selbstregelndes Luftdrosselventil nach Anspruch 1, wobei die Außenabdeckung (8) eine zylindrische Struktur ist, wobei der Einlassverteiler (9) und der Auslassverteiler (10) über Flansche (12, 13) an der Außenabdeckung (8) angebracht sind.

7. Verfahren zum Regeln von Luft unter Benutzung eines Selbstregelndes Luftdrosselventils (1) nach Anspruch 1, das Verfahren umfassend
das Ausüben von Luftdruck auf einen männlichen Kolben (2) über den Einlassverteiler (10) unter Benutzung eines Verdichters, wobei Umkehrkraft, die durch die Schraubenfeder erzeugt ist, die Bewegung des männlichen Kolbens (2) zum Variieren der Öffnung von Belüftungsdurchlässen (6) zum Regeln von Luft durch das Ventil (1) regelt.

8. Verfahren zum Zusammenbauen eines selbstregelnden Luftdrosselventils (1) nach Anspruch 1, das Verfahren folgendes umfassend:
a) Stützen einer Schraubenfeder (7) am männlichen Kolben (2) an einem Ende der Schraubenfeder (7) und Befestigen des anderen Endes der Feder an einem Flansch (14);
b) Durchführen einer Kolbenführung (4) durch die Schraubenfeder (7) und Anbringen am Flansch (14) an einem Ende unter Benutzung von Befestigungselementen (15) und Durchführen des anderen Endes der Kolbenführung durch den männlichen Kolben (2);
c) Verbinden eines weiblichen Kolbens mit einem Flansch (12);
d) Anbringen eines Verteilers (5) zum Einfassen des männlichen (2) und des weiblichen (3) Kolbens unter Benutzung von Befestigungselementen (16);
e) Anbringen einer Außenabdeckung (8) am Verteiler (5) über den Flansch (12) zum Einfassen des Verteilers (5); und
f) Befestigen eines Einlassverteilers (9) an der Oberseite der Außenabdeckung (8) und eines Auslassverteilers (10) an der Unterseite der Außenabdeckung (8) über Flansche (12, 13).

9. Brennstoffzelle, umfassend ein selbstregelndes Luftdrosselventil (1) gemäß Anspruch 1.

## Revendications

1. Papillon à air à régulation automatique (1) comprenant :
a. un piston plongeur mâle (2) et un piston plongeur femelle (3) de formes prédéterminées ;
b. un ressort hélicoïdal (7) supportant le piston plongeur mâle (2) au niveau d'une extrémité du ressort (7) et l'autre extrémité du ressort est fixée sur une bride (14) ;
c. un guide de piston plongeur (4) passant par le ressort hélicoïdal (7) et fixé à la bride (14) au niveau d'une extrémité en utilisant des fixations (15) et une autre extrémité passe à travers le piston plongeur mâle (2) ;
d. un collecteur (5) comprenant un ou plusieurs orifices de dégazage (6) sur sa surface, ledit collecteur (5) est configuré pour loger lesdits pistons plongeurs mâle (2) et femelle (3) ; et
e. un couvercle externe (8) logeant le collecteur (5), dans lequel ledit couvercle externe (8) est fixé avec un collecteur d'entrée (9) au sommet du couvercle externe (8) et un collecteur de sortie (10) au fond du couvercle externe (8) ;
dans lequel ledit piston plongeur mâle (2) est régulé par la force de l'air comprimé fourni à travers le collecteur d'entrée (9) et la force de rappel du ressort hélicoïdal (7) pour modifier le taux d'ouverture des orifices de dégazage (6) afin de réguler le papillon à air.

2. Papillon à air à régulation automatique selon la revendication 1, dans lequel lesdits pistons plongeurs mâle (2) et femelle (3) sont réalisés avec un matériau résistant à la corrosion choisi dans un groupe comprenant le Téflon, l'acier inoxydable, le titane, le polyfluorure de vinylidène et les alliages d'aluminium.

3. Papillon à air à régulation automatique selon la revendication 1, dans lequel le collecteur d'entrée, le piston plongeur femelle, le piston plongeur mâle et le collecteur de sortie sont axialement alignés les uns par rapport aux autres.

4. Papillon à air à régulation automatique selon la revendication 1, dans lequel la forme du piston plongeur mâle (2) est conique, dans lequel la forme dudit piston plongeur femelle (3) correspond à la forme du piston plongeur mâle (2).

5. Papillon à air à régulation automatique selon la revendication 1, dans lequel le collecteur (5) comprend un ou plusieurs orifices d'aération (11) sur sa surface pour empêcher le calage de l'air à l'intérieur du collecteur (5).

6. Papillon à air à régulation automatique selon la revendication 1, dans lequel ledit couvercle externe (8) est une structure cylindrique, dans lequel le collecteur d'entrée (9) et le collecteur de sortie (10) sont fixés au couvercle externe (8) par le biais des brides (12, 13).

7. Procédé pour réguler l'air à l'aide d'un papillon à air à régulation automatique (1) selon la revendication 1, ledit procédé comprenant l'étape consistant à exercer la pression de l'air sur un piston plongeur mâle (2) à travers le collecteur d'entrée (10) en utilisant un compresseur, dans lequel la force de rappel générée par le ressort hélicoïdal régule le mouvement du piston plongeur mâle (2) pour modifier l'entrée des orifices de dégazage (6) afin de réguler l'air à travers le papillon (1).

8. Procédé pour assembler un papillon à air à régulation automatique (1) selon la revendication 1, ledit procédé comprenant les étapes consistant à :
a. supporter un ressort hélicoïdal (7) sur le piston plongeur mâle (2) au niveau d'une extrémité du ressort hélicoïdal (7) et fixer l'autre extrémité du ressort sur une bride (14) ;
b. faire passer un guide de piston plongeur (4) à travers le ressort hélicoïdal (7) et le fixer à la bride (14) au niveau d'une extrémité en utilisant des fixations (15) et faire passer l'autre extrémité du guide de piston plongeur à travers le piston plongeur mâle (2) ;
c. raccorder un piston plongeur femelle à une bride (12) ;
d. monter un collecteur (5) pour loger lesdits pistons plongeurs mâle (2) et femelle (3) en utilisant des fixations (16) ;
e. fixer un couvercle externe (8) au collecteur (5) par le biais de la bride (12) afin de loger le collecteur (5) ; et
f. fixer un collecteur d'entrée (9) au sommet du couvercle externe (8) et un collecteur de sortie (10) au fond du couvercle externe (8) par le biais des brides (12, 13).

9. Pile à combustible comprenant un papillon à air à régulation automatique (1) selon la revendication 1.
